Europäisches Patentamt

European Patent Office

Office européen des brevets

(19)

(11) Publication number: **0 445 572 A1**

# EUROPEAN PATENT APPLICATION

(12)

(21) Application number: **91102334.9**

(22) Date of filing: **19.02.91**

(51) Int. Cl.⁵: **G06K 7/10**

(30) Priority: **06.03.90 IT 1957890**

(43) Date of publication of application:
**11.09.91 Bulletin 91/37**

(84) Designated Contracting States:
**DE ES FR GB IT**

(71) Applicant: **SANIMATICA S.R.L.**
**Via Correggio, 45**
**I-20149 Milano(IT)**

(72) Inventor: **Folpini, Luciano**
**Via della Rondine, 6**
**I-20147 Milano(IT)**

(74) Representative: **Luksch, Giorgio, Dr.-Ing. et al**
**Ing. A. Giambrocono & C. S.r.l. Via Rosolino**
**Pilo, 19/b**
**I-20129 Milano(IT)**

(54) Method and device for ensuring that a sale of packaged products, in particular a sale subject to control by an official body or organization such as a sale of medicinal products or the like, has taken place legally and once only.

(57) The method of the invention ensures that a sale of a packaged product, in particular a sale subject to control by an official body or organization such as a sale of medicinal products or the like, has taken place legally and once only, said products being contained in packages (4) provided with product identification codes (6) such as usual bar codes; according to the invention, after the identifying code (6) on the product package (4) has been read said code (6) is annulled, the data resulting from said reading being fed to a data printing, recording (15) or similar device only after the annulment of said code has been verified, said recording device (15) verifying and recording the fact that the product sale has taken place.

A device for implementing the aforesaid method comprises means (8) for reading the product identification code (6), means (10) for annulling said code (6), and sensing means (12) for verifying that said annulment has taken place, said reading means (8), annulment means (10) and sensor means (12) being connected to a control circuit (13) which receives the reading signals (L) and operates the annulment means (10), after which on the basis both of verification signals (R) from the sensor means (12) and the reading signals (L) recognizes the product and feeds its data, such as the name and cost, to memorizing means (15) and advantageously to printing means (16) which reproduce said data on a support such as a medical prescription (17) or a similar document, and/or on a fiscal receipt.

Fig.1

This invention relates to a method and device for ensuring that a sale of packaged products, in particular a sale subject to control by an official body or organization such as a sale of medicinal products or the like, has taken place legally and once only.

With particular but not exclusive reference to medicinal products (or more simply medicines), their sale is subject to control by competent bodies of the Ministry of Health. On being sold to a user, the usual label or tag carrying the code identifying their contents is removed from them after the tab has been read by a usual bar code reader. This tag is then attached in any known manner to the usual medical prescription presented by the user.

If however the sale takes place without a medical prescription, the price tag is not removed from the package.

This makes it possible for the same product to be again sold, such a sale obviously not being acceptable to the said Ministry, which is responsible for monitoring the sale of medicines.

It can also happen that as a result of fraud or other illegal acts it may appear that more medicines have been sold to the public than is actually the case, in that more price tags are presented to said Ministry or its competent bodies than have been removed from medicines sold.

In addition, the sale of a product of the aforesaid type on presentation of a medical prescription requires time for the removal of the price tag and its attachment to said prescription. These operations can in fact only be carried out manually.

This is obviously a burden for the person making the sale (pharmacist) and interrupts the rapid sale of medicines to the public.

An object of the present invention is to provide a method and device which allow rapid sale of packaged products such as medicinal products to the public while allowing the competent official bodies or organizations to unequivocally check and verify said sale to the public.

A further object is to provide a method of the aforesaid type which is simple to implement and requires little time for its execution.

A further object is to provide a device for implementing the aforesaid method which is compact and enables the method to be used for packaged products of any size.

A further object is to provide a device which is reliable and enables the product sale data to be communicated directly to remote memory units located with the official bodies or organizations responsible for controlling such sales.

A further object is to provide a device which enables the sale data to be permanently or temporarily memorized.

These and further objects which will be more apparent to the expert of the art are attained by a method for ensuring that a sale of packaged products, in particular a sale subject to control by an official body or organization such as a sale of medicinal products or the like, has taken place legally and once only, said products being contained in packages provided with product identification codes such as usual bar codes, characterised in that after the identifying code on the product package has been read said code is annulled, the data resulting from said reading being fed to a data printing, recording or similar device only after the annulment of said code has been verified, said recording device verifying and recording the fact that the product sale has taken place.

Said method is implemented by a device characterised by comprising means for reading the product identification code, means for annulling said code and sensing means for verifying that said annulment has taken place, said reading, annulment and sensor means being connected to a control circuit which receives the reading signals and operates the annulment means, after which on the basis both of verification signals from the sensor means and of the reading signals recognizes the product and feeds its commercial data, such as the name and cost, to memory means and advantageously to printing means which reproduce said data on a support such as a medical prescription or a similar document, and/or on a fiscal receipt.

The present invention will be more apparent from the accompanying drawing, which is provided by way of non-limiting example and in which:

Figure 1 is a partially exploded perspective view of one embodiment of the device according to the invention;

Figure 2 is a schematic part section on the line II-II of Figure 1; and

Figure 3 is a partial perspective view from above of a different embodiment of the device of Figure 1.

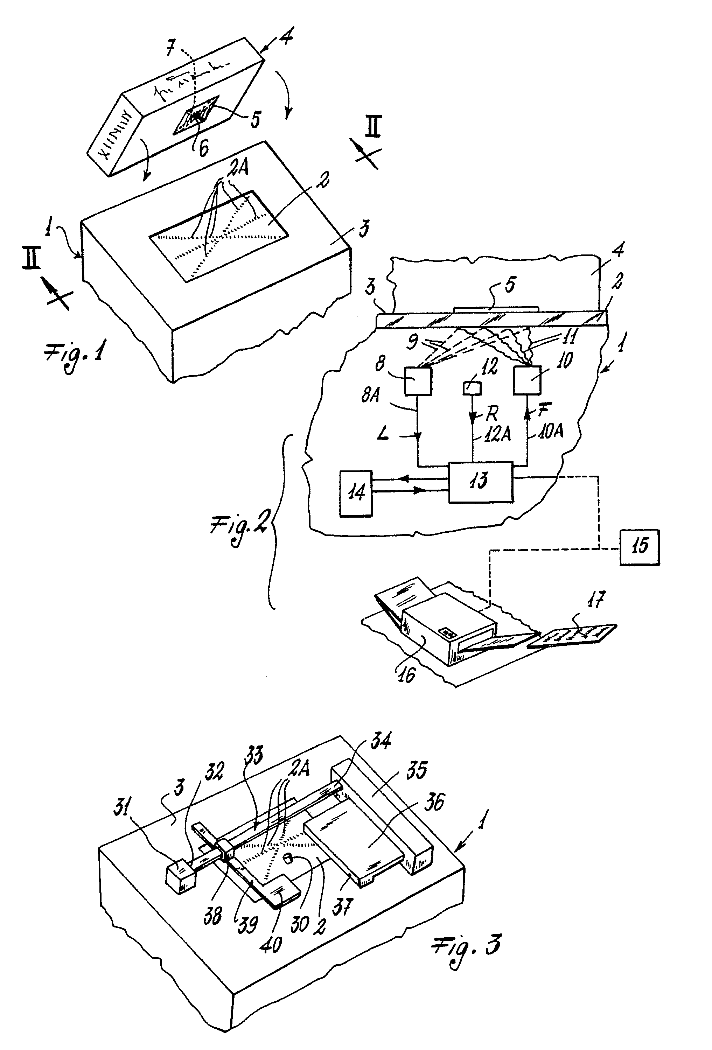

With reference to Figures 1 and 2 the device according to the invention comprises a box element 1 provided with a window 2 of transparent material (such as glass) in its upper face 3. A package 4 in particular containing a medicinal product is intended to be placed on said face.

Specifically, the package or container 4 comprises a label or tag on which a usual bar code 6 is present containing usual information relative to the product contained in said package.

In the example of Figures 1 and 2 the code is covered with a known ink which is usually transparent but which becomes permanently opaque if struck by a light beam of a particular known wavelength. Alternatively an ink can be used which remains transparent until struck by a heat beam of a particular intensity, or until subjected to adequate pressure, or until it comes into contact with particular reagents.

When said ink becomes opaque it generates in the illustrated example an annulment mark (such as that shown dashed in Figure 1 and indicated by 7) which at least partly covers the bar code 6 (or other product identification code or mark) to thus make it impossible to read. Advantageously said ink also reproduces information for the user of the package.

In a position corresponding with the window 2, the box element or container 1 houses:

a) an optical reader of known type having a visual field defined by rays 9 shown dashed in Figure 2;

b) a light wave or thermal wave generator 10 or other devices for exerting pressure or emitting reagents (such as a high-power halogen lamp, laser or other beam generator, ultraviolet or other light generator) having a field of action equal to that of the rays 9 and defined by wavy lines 11; and

c) at least one optical sensor 12 to establish that the annulment of the bar code 6 on the tag 5 has taken place.

Said optical reader 8, wave generator 10 and optical sensor 12 are connected via respective lines 8A, 10A, 12A to a microprocessor circuit 13 (or a like electronic circuit) provided with a memory 14 (ROM) and connected to a memorizing means 15 which can be a computer or a writing device consisting of magnetic discs, magnetic tapes or removable memory cells.

The circuit or microprocessor 13 is also associated with a printer 16 for reproducing the data provided on the package 4 (present in the bar code 6) onto a medical prescription 17 or a similar document authorizing the purchase of the product. Alternatively or additionally, the microprocessor 13 is connected to a usual cash register (not shown) which issues the fiscal receipt relative to the sale of the product present in the package 4.

The method according to the invention will now be clarified by describing the use of the device shown in Figures 1 and 2.

It will be assumed that a package 4 is placed on the face 3 of the element 1 such that the tag 5 lies on the window 2 and that the bar code 6 lies within the guides or lines 2A present on said window (see Figure 1).

The reader 8 is then operated in known manner and proceeds to read the bar code 6. A signal L is thus generated along the line 8A which reaches the microprocessor 13 and is memorized by this latter in a usual memory cell with which it is provided (such as a RAM). Following the arrival of the signal L, the microprocessor 13 feeds an operation enabling signal F to the wave generator 10, which thus operates.

This generator feeds waves (thermal, light etc.) to the window 2. These waves strike the tag 5 to make the ink on said tag permanently opaque.

The tag is thus annulled, ie the code 6 is irreparably damaged such as to make it unreadable by a reader analogous to that indicated by 8 in Figure 2.

The annulment of the bar code 6 is sensed by the sensor 12, which feeds a signal R to the microprocessor 13.

When this latter receives said signal it accepts the previously memorized reading made by the reader 8 (signal L). Following this the microprocessor 13 reads from the memory 14 the data corresponding to the signal L received, to thus identify the product contained in the package 4 together with all its data, including its cost.

Having done this the microprocessor feeds the data read from the memory 14 to the memorizing means or writing device 15 which stores them.

At the same time, said data (possibly with the exception of those relating to the product cost) reach the printer 16 which reproduces them on the prescription 17.

The cost data are fed to the cash register (if provided) which issues the usual fiscal receipt.

It should be noted that the annulment of the code 6 is permanent and can also be achieved by blocking out the bars (by making an ink covering them opaque) or by adding coloured markings, writing or symbols to the statutory wording on the tag or in proximity to it.

This invalidates the medicine code, making its resale substantially impossible.

The described device can also be provided with a sensor and/or locators to verify and achieve exact positioning of the element 1 of the package 4 on the face 3.

Known members can also be provided to verify the authenticity of the labels 5, such as Wood light lamps to expose hidden writing or the like.

Sensors (not shown) are also provided to verify that the package has not shifted during said reading and annulment, and safety means can also be provided to ensure the safety of the operator if required.

Said memorizing or writing member 15 can also record the sale of the product on a fiscal magnetic support (such as said magnetic or optical disc, paper, semiconductor or magnetic bubble memory etc.). This recording can be done using a special code readable only by units provided for the purpose by the official body or service which controls the sale of said products.

This further ensures the non-alterability of the recorded information.

Alternatively, the transaction can be recorded in a sealed "fiscal memory" within the device, the memory being able to be read remotely via a modem by the control service or in connection with a fiscally controlled cash register.

Alternatively or additionally, a statistical summary of the transactions (quantity per code number, number of purchasers, maximum number acquired per purchaser, etc.) can be recorded to immediately display any fraud.

The device of Figures 1 and 2 can also be used to annul a tag 5 covered with a thin electrosensitive layer of known type. Such a tag is already widely used on commercially available products.

Specifically, by placing the package provided with such a tag on the window 2 (see Figures 1 and 2), the tag is annulled by blacking the electrosensitive layer by means of the waves (thermal or in the form of small electrical discharges) generated by the generator 10 and striking said layer.

The tag 2 can be annulled by blacking the bar code or the spaces between the code bars, or alternatively by blacking a part of the tag itself (for example close to its edge). In this latter case the reading of the bar code is not prevented, but the annulment is recognized.

It should be noted that if the waves generated by the generator 10 are electrical discharges, the window 2 can be free, ie without transparent material.

The device of Figures 1 and 2 can also be used if the tag 2 is of the (already known) type containing within it a printed microcircuit in the form of a coil which interacts with magnetic fields into which it is immersed to indicate its existence. In other words, such tags contain tuned electrical radio-absorption microcircuits which can be annulled by suitable radiofrequencies.

If the tag 2 is of this type, the waves generated by the generator 10 are electromagnetic waves which on striking said microcircuit interrupt its continuity, so that it cannot respond to the signal emitted by a usual reader for tags formed in this manner.

Said tags 2 thus become unreadable, indicating that the packages with which they are associated have already been previously sold.

A different embodiment of the invention, which also differs in terms of the annulment device defined by the wave generator 10, is shown in Figure 3. In this figure, parts corresponding to those of Figures 1 and 2 are indicated by the same reference numerals.

In Figure 3, the bar code is annulled by spraying ink, for example of indelible type, onto the bars.

This is achieved by providing in correspondence with the window 2 or in proximity thereto a nozzle 30 connected to a sprayer (not shown) present substantially in place of the generator 10 of Figure 2 and controlled by the microprocessor 13. For example such a sprayer comprises a small pump driven by an electric motor, the operation of which is controlled by the microprocessor 13.

In the embodiment under examination, because ink is fed onto the tag 5, the package must be raised from the surface 3 of the element 1 but without this preventing the reading of the bar code 6 by the optical reader 8.

To achieve this, the device of Figure 3 comprises means for supporting the package 4 above the window 2, at least one of such means being movable to enable the device under examination to be used with packages of any size.

Specifically (see Figure 3), on the surface 3 there is provided a first upright 31 supporting one end 32 of a straight guide 33, the other end 34 of which is associated with a shoulder 35 positioned substantially parallel to one of the sides of the element 1 (and of the window 2).

The shoulder 35 supports a support plate 36 which rests at at least one point of its end 37 on the face 3 of the element 1.

The straight guide 3 slidingly supports a carriage 38 supporting in known manner an arm 39 having an enlarged end 40 which together with the plate 36 supports the package 4 during the reading and annulment of the bar code 6.

For this purpose, the package is placed on the plate 36 and on said end 40 so that the bar code carried by the package lies on the guides or lines 2A of the window 2.

The code is then read in the manner already described in relation to Figures 1 and 2.

Following this, the microprocessor 13 enables the operation of the sprayer (not shown) so that ink (or the like) emerges from the nozzle 30 to at least partly cover the code 6, making its reading impossible.

The device then memorizes the transaction via the memorizing means 15 and prints the data on the prescription 17 in the manner described in relation to Figures 1 and 2.

It should be noted that the position of the end 40 of the arm 39 can be varied relative to the plate 36 so that the device can be used with packages of different sizes.

Other devices can be used to display particular inks, such as those stated in which the change from transparency to opacity is achieved by feeding suitable chemical reagents onto them (in which case the annulment device is similar to that described in relation to Figure 3). In the case of microencapsulated inks which are displayed by pressure exerted on the capsules, the annulment device comprises for example a small pressing arm or member moved manually or automatically when it is determined that the tag 5 lies in a particular position on the window 2. This member can involve part of the window or be positioned to the side of it. In the first case the device of the invention can be similar to that described in relation to Figure 1 but without the annulment device and including the movable part on the window 2. In the second case the device of the invention can be similar to that shown in Figure 2 but without the nozzle 30 and in addition comprise an arm movable laterally to the window 2 and carrying a presser member arranged to cooperate with the tag 5.

In this latter case known means are provided to retain the box element during the action of the presser member on the tag 5.

A device for implementing the method of the invention has been described in which the package 4 is placed manually on the window 2.

However a device can be provided in which the package 4 is positioned automatically on said window by using at least one small conveyor belt or other similar means comprising an aperture or cavity to enable the optical reader 8, the annulment device 10 and the other elements of the device of the invention to act.

In this latter case, the device according to the invention can be of closed box form by providing in at least two sides a slot for feeding the packages 4 to the window 2 such as to enable them to be transported on the conveyor belt or the like, and at least one exit slot for said packages 4.

A device and method as described enable the sale of controlled products to be easily recorded and prevent any subsequent illegal sale.

They also enable the controlling official body or service to easily and quickly verify a sale.

## Claims

1. A method for ensuring that a sale of packaged products, in particular a sale subject to control by an official body or organization such as a sale of medicinal products or the like, has taken place legally and once only, said products being contained in packages provided with product identification codes such as usual bar codes, characterised in that after the identifying code (6) on the product package (4) has been read said code (6) is annulled, the data resulting from said reading being fed to a data printing, recording (15) or similar device only after the annulment of said code has been verified, said recording device (15) verifying and recording the fact that the product sale has taken place.

2. A method as claimed in claim 1, characterised in that the data relating to a product recognized as having been sold is automatically printed on a medical prescription or similar document which authorizes the purchase of said product.

3. A method as claimed in claim 1, characterised in that the annulment is achieved by feeding thermal, light or similar waves onto the product identification code (6) on which there is provided a known ink which remains transparent until struck by said waves, after which it becomes opaque and damages said code, thus preventing its subsequent reading.

4. A method as claimed in claim 1, characterised in that the annulment is achieved by feeding onto the product identification code (6) a substance which covers the code (6) so as to prevent its subsequent reading.

5. A method as claimed in claim 3, characterised in that the annulment is achieved by subjecting the ink on the identification code to a suitable pressure or by exposing the ink to suitable chemical reagents which change it from transparent to opaque.

6. A method as claimed in claim 1, characterised in that the annulment is achieved by directing electrical discharges onto an electrosensitive layer which covers the product identification code (6) in known manner.

7. A method as claimed in claim 1, characterised in that the annulment is achieved by directing electromagnetic waves towards the product identification code, said code being provided on known labels or tags (2) comprising a printed microcircuit in the form of a coil able to interact with suitable magnetic fields.

8. A method as claimed in claim 1, characterised in that the recording or transaction is read from a remote position.

9. A device for implementing the method claimed in claim 1, characterised by comprising means (8) for reading the product identification code (6), means (10) for annulling said code (6), and sensing means (12) for verifying that said annulment has taken place, said reading means (8), annulment means (10) and sensor means (12) being connected to a control circuit (13) which receives the reading signals (L) and operates the annulment means (10), after which on the basis both of verification signals (R) from the sensor means (12) and of the reading signals (L) recognizes the product and feeds its data, such as the name and cost, to memorizing means (15) and advantageously to printing means (16) which reproduce said data on a support such as a medical prescription (17) or a similar document, and/or on a fiscal receipt.

10. A device as claimed in claim 9, characterised in that the annulment means (10) are at least one light wave generator.

11. A device as claimed in claim 9, characterised in that the annulment means (10) are at least one heat or thermal wave generator.

12. A device as claimed in claim 9, characterised in that the annulment means (10) are a sprayer for a substance able to at least partially cover the identification code (6) present on the package (4) of the product being sold.

13. A device as claimed in claim 9, characterised in that the annulment means (10) are an electromagnetic wave generator.

14. A device as claimed in claim 9, characterised in that the annulment means (10) are an electrical discharge generator.

15. A device as claimed in claim 9, characterised in that the annulment means are a presser member arranged to act on the product identification code (6).

16. A device as claimed in claim 9, characterised in that the sensor means are at least one optical sensor (12).

17. A device as claimed in claim 9, characterised in that the memorizing means (15) are at least one apparatus arranged to transfer the sold product data onto magnetic, paper, optical or similar supports.

18. A device as claimed in claim 17, characterized in that the memorizing means (15) are connected to a modem to allow remote reading.

19. A device as claimed in claim 9, characterised in that the reading means (8), annulment means (10) and sensor means (12) are arranged in a box element (1) provided in one face (3) with a window (2), and under said window (2).

20. A device as claimed in claim 19, characterized in that on that face (3) of the box element (1) containing the window (2) there are provided locators to define a seat for the package (4) during the reading of the identification code (6) for the product contained in the package (4), position sensor means being provided to determine the exact position of the package (4) on said window (2).

21. A device as claimed in claims 12 and 19 or 12 and 20, characterised in that in correspondence with or on the window (2) there is provided a nozzle (30) for spraying onto the product identification code (6) the substance which is to cover said code, said nozzle (30) being connected to the sprayer positioned below said window (2).

22. A device as claimed in claims 9 and 19, characterised by comprising means (36, 39) for supporting the package (4) during the reading and annulment of the identification code (6), said means (36, 39) keeping said package separated from the window (2) of the box element (1).

23. A device as claimed in claim 22, characterised in that said support means comprise two elements (40, 36) of which at least one (40) is movable, along a guide (33), above that face (3) of the box element (1) in which the window (2) is provided.

Fig. 1

Fig. 2

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 355 553   (W. REITER)<br>* page 6 *<br>— — — | 1,9 | G 06 K 7/10 |
| A | EP-A-0 015 307   (LGZ LANDIS & GYR)<br>* abstract; page 4, line 27 *<br>— — — | 1,3,9,11 | |
| A | GB-A-1 400 317   (J.F. PREECE)<br>* complete document *<br>— — — — — | 1 | |

| TECHNICAL FIELDS SEARCHED (Int. Cl.5) |
|---|
| G 06 K<br>A 47 F |

The present search report has been drawn up for all claims

| Place of search | Date of completion of search | Examiner |
|---|---|---|
| Berlin | 08 May 91 | ZOPF K |

CATEGORY OF CITED DOCUMENTS

X : particularly relevant if taken alone
Y : particularly relevant if combined with another
　document of the same catagory
A : technological background
O : non-written disclosure
P : intermediate document
T : theory or principle underlying the invention

E : earlier patent document, but published on, or after
　the filing date
D : document cited in the application
L : document cited for other reasons

& : member of the same patent family, corresponding
　document